(19) Europäisches Patentamt
European Patent Office
Office européen des brevets

(11) **EP 1 263 845 B1**

(12) **EUROPÄISCHE PATENTSCHRIFT**

(45) Veröffentlichungstag und Bekanntmachung des Hinweises auf die Patenterteilung:
**22.03.2006 Patentblatt 2006/12**

(21) Anmeldenummer: **01913516.9**

(22) Anmeldetag: **17.01.2001**

(51) Int Cl.:
*C08J 3/09* (2006.01)  *D01F 2/00* (2006.01)
*D01F 2/02* (2006.01)

(86) Internationale Anmeldenummer:
**PCT/DE2001/000206**

(87) Internationale Veröffentlichungsnummer:
**WO 2001/064775 (07.09.2001 Gazette 2001/36)**

(54) **VERFAHREN ZUR HERSTELLUNG EINER LÖSUNG ERHÖHTER THERMISCHER STABILITÄT VON CELLULOSE IN WÄSSRIGEM AMINOXID**

METHOD FOR PRODUCING A CELLULOSE SOLUTION IN AN AQUEOUS AMINE OXIDE, SAID SOLUTION HAVING AN INCREASED THERMAL STABILITY

PROCEDE DE PRODUCTION D'UNE SOLUTION DE CELLULOSE D'UNE STABILITE THERMIQUE ELEVEE DANS DE L'AMINOXYDE AQUEUX

(84) Benannte Vertragsstaaten:
**AT BE CH CY DE DK ES FI FR GB GR IE IT LI LU MC NL PT SE TR**

(30) Priorität: **28.02.2000 DE 10009471**

(43) Veröffentlichungstag der Anmeldung:
**11.12.2002 Patentblatt 2002/50**

(73) Patentinhaber: **THÜRINGISCHES INSTITUT FÜR TEXTIL- UND KUNSTSTOFF-FORSCHUNG e.V.**
**07407 Rudolstadt (DE)**

(72) Erfinder:
• **KOSAN, Birgit**
  **07407 Rudolstadt (DE)**
• **MICHELS, Christoph**
  **07407 Rudolstadt (DE)**
• **BAUER, Ralf-Uwe**
  **07407 Rudolstadt (DE)**
• **MOOZ, Michael**
  **07318 Volkmannsdorf (DE)**
• **NIEMZ, Frank-Günter**
  **07407 Rudolstadt (DE)**

(74) Vertreter: **Brandenburg, Thomas Patentanwalt**
**Bonner Talweg 87**
**53113 Bonn (DE)**

(56) Entgegenhaltungen:
DD-A- 229 708          US-A- 4 324 593

EP 1 263 845 B1

**Beschreibung**

Die Erfindung betrifft ein Verfahren zur Herstellung einer Lösung erhöhter thermischer Stabilität von Cellulose in wässrigem Aminoxid, vorzugsweise N-Methylmorpholin-N-oxid, für die Verarbeitung zu cellulosischen Formkörpern nach dem Lyocellverfahren, bei dem man Zellstoff in wässrigem Aminoxid suspendiert und die Suspension in die Celluloselösung überführt.

Aus der Literatur (K. Götze Chemiefasern nach dem Viskoseverfahren Band I Seite 362 - 369 Springer Verlag Berlin/ Heidelberg/New York 1967) ist bekannt, dass der Abbau der Cellulose stark vom pH-Wert abhängig ist und daß in Gegenwart von Oxidationsmitteln das Verhältnis von reduzierenden Carbonyl- und Hydroxylgruppen zu Carboxylgruppen ebenfalls stark vom pH-Wert abhängt.

Das Auflösen von Cellulosen in wasserhaltigen Aminoxiden in der Wärme wird ebenfalls von Abbauvorgängen begleitet, da einerseits die Aminoxide Oxidationsmittel mit schwach basischen Eigenschaften darstellen und andererseits beim Abbau leicht Nebenprodukte wie primäre und sekundäre Amine entstehen, die stark basische Eigenschaften besitzen.

In der DD 218 104 wird zur Stabilisierung von Schmelzen aus Cellulose und Aminoxiden der Zusatz einer oder mehrerer basisch wirkender Substanzen in Mengen zwischen 0,1 und 10 %, bezogen auf die Celluloselösung, beansprucht.

Im USP 4 324 593 wird ein Zusatz von Aminen, wässrigem Ammoniak oder Alkalihydroxiden zum Erhöhen der Lösegeschwindigkeit von Cellulose in Aminoxiden vorgeschlagen. Die beschleunigende Wirkung soll durch die pH-Wert-Veränderung bedingt sein.

In der WO 95/23827 wird zum Erhöhen der Stabilität der Lösungen von Cellulose in Aminoxiden, vorzugsweise N-Methylmorpholin-N-oxid, vorgeschlagen, dass das regenerierte tertiäre Aminoxid einen pH-Wert in Abhängigkeit von der Aminoxidkonzentration A gemäß folgender Gleichung

$$pH = -0,0015 \times A^2 + 0,2816 \times A + f$$

besitzen soll und dass man diesen durch Zusatz alkalischer Substanzen bzw. durch Passieren der Aminoxide von Ionenaustauschern einstellt. Die Gleichung soll im Bereich 40 % $\leq$ A $\leq$ 86 % mit f = 1,00 für die obere Grenze und f = -1,80 für die untere Grenze gelten.

Die Erhöhung der Stabilität durch die Einstellung des pH-Wertes der Aminoxidlösung wird leider nur für solche Lösungen beschrieben, die gleichzeitig Gallussäurepropylester und Hydroxylamin als Stabilisatoren enthalten. Der Anteil, der Stabilisierung, der allein auf die pH-Wert - Einstellung zurückzuführen ist, bleibt ungenannt.

Aus der Definition des pH-Wertes als negativer Logarithmus der Wasserstoffionenaktivität ist abzuleiten, dass er nur für ganz verdünnte wässrige Lösungen gilt und sich wegen der Temperaturabhängigkeit der Ionenbeweglichkeit stark mit der Temperatur ändert. Die Messung des pH-Wertes von Lösungen mit 86 % NMMO, die einen Schmelzpunkt von ca. 70°C besitzen, erscheint deshalb wenig sinnvoll.

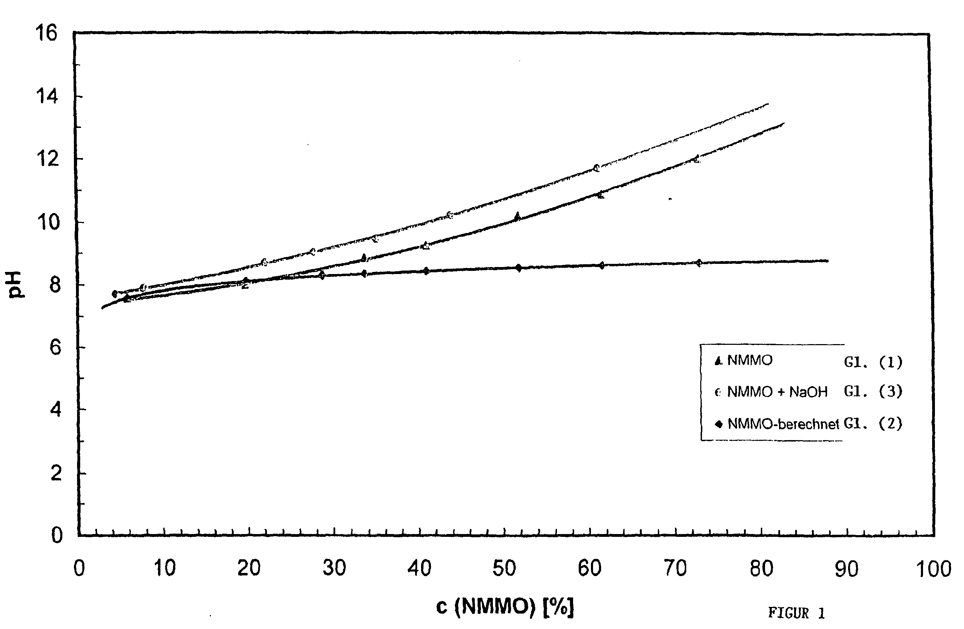

Messungen des pH-Wertes von wässrigen NMMO-Lösungen im Konzentrationsbereich 4 bis 77 % NMMO bei 22°C führen zu einer Abhängigkeit gemäß Figur 1. Der pH-Wert folgt der Gleichung (1)

$$pH = 0,0006 \, c^2 + 0,0224 \, c + 7,38 \qquad (1)$$

und steigt von pH - 7,4 für c $\rightarrow$ 0 auf pH - 12,0 bei c = 76,6 %. Diese Gleichung hat einen physikalischen Sinn, da für c $\rightarrow$ 0 der pH des unendlich verdünnten Aminoxides, dem einer sehr schwachen Base entspricht. Berechnet man den pH-Wert der Aminoxidlösung, wie er aus der reinen Verdünnung bzw. Aufkonzentrierung folgt, so resultiert die Kurve gemäß Gleichung (2) in Figur 1.

$$pH = 0,4328 \, \ln c + 6,82 \qquad (2)$$

Der Vergleich von Gleichung (1) und (2) lässt erkennen, dass der gemessene pH-Wert wesentlich stärker steigt, als dem zunehmenden NMMO-Gehalt entspricht. Das ist nur zu erklären durch eine Zunahme der Dissoziation mit steigender Konzentration und/oder die pH-Wert - Messung ist unreal.

Die Messung unter Zusatz 0,07 g NaOH/kg NMMO-Monohydrat führt schließlich zur Kurve gemäß Gleichung (3) in Figur 1.

$$pH = 0{,}0004 \cdot c^2 + 0{,}0417 \, c + 7{,}53 \qquad (3)$$

Der pH-Wert der Lösung steigt an, die Erhöhung ist aber analog (1) größer als nach Berechnung zu erwarten gewesen wäre.

Eine stabilisierende Wirkung des Alkalizusatzes zum Aminoxid ist schwer zu erklären, da das NMMO-Monohydrat in der Celluloselösung nach Gleichung (1) einen rechnerischen pH-Wert von 13,8 besitzt.

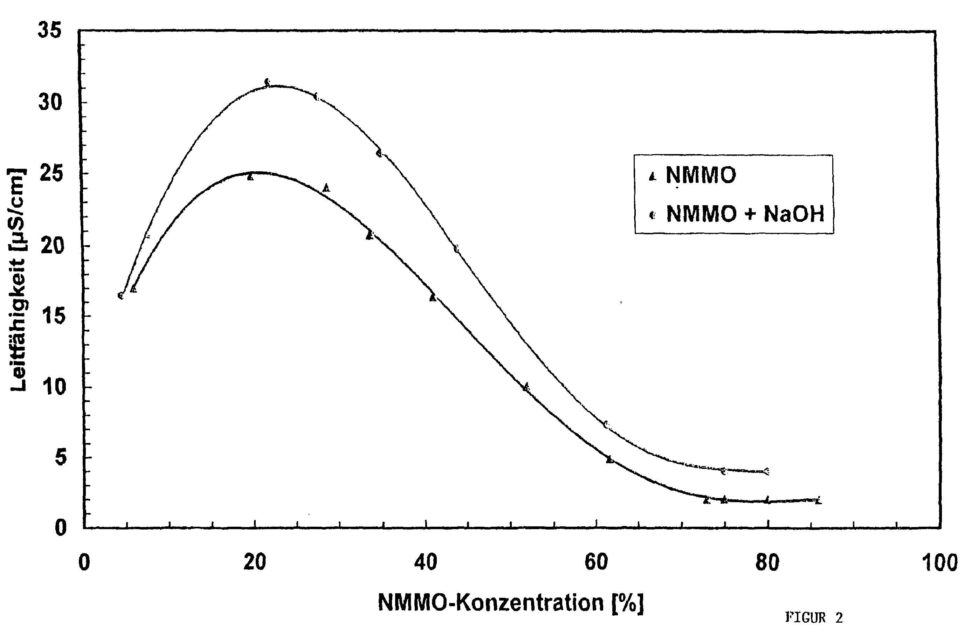

Die Messung der Leitfähigkeiten der Lösungen gemäß Gleichung (1) und (3) ist in Figur 2 dargestellt. Geht man davon aus, dass die Leitfähigkeit von reinem Wasser 1-2 $\mu$S/cm beträgt, so steigt die Leitfähigkeit zunächst an, erreicht bei ca. 20 % NMMO ein Maximum, um bei höheren Konzentrationen wieder auf ca. 2 $\mu$S/cm abzufallen. Der Zusatz von NaOH führt zu einer leichten Verschiebung des Maximums der Leitfähigkeit auf ca. 25 % NMMO, der Kurvenverlauf bleibt aber grundsätzlich gleich.

Aufgabe der vorliegenden Erfindung ist die Schaffung eines Verfahrens zur Herstellung einer Lösung erhöhter thermischer Stabilität von Cellulose in wässrigem Aminoxid für den Einsatz im Lyocellverfahren. Insbesondere soll eine Celluloselösung geschaffen werden, deren Stabilität von dem eingesetzten Zellstoff, insbesondere seiner Provenienz weitgehend unabhängig ist. Darüber hinaus sollen Celluloselösungen erhöhter Stabilität bei der nachfolgenden Verarbeitung auch aus Zellstoffen hergestellt werden, die an sich zur Bildung von Lösungen minderer Stabilität neigen. Weitere Vorteile ergeben sich aus der folgenden Beschreibung.

Diese Aufgabe wird bei dem eingangs genannten Verfahren erfindungsgemäß dadurch gelöst, daß man den Baseneigenverbrauch des zur Lösungsherstellung eingesetzten Zellstoffs und der ggfs. eingesetzten Zusatzstoffe in einer Dispersion in wässriger Aminoxidlösung bestimmt und die Celluloselösung unter Zusatz einer dem bestimmten Eigenverbrauch des Zellstoffs und ggfs. der Zusatzstoffe entsprechenden Basenmenge bildet. Erfindungsgemäß wurde gefunden, daß nicht primär die Basizität des Aminoxids eine stabilisierende Wirkung auf das System Cellulose/Aminoxid/ Wasser ausübt, sondern ein Ausgleich des Basenverbrauchs des eingesetzten Zellstoffs (und ggfs der Zusatzstoffe) zu einer Stabilisierung der gebildeten Lösung führt. Weiter wurde gefunden, daß Zusatzkomponenten, wie z.B. der Stabilisator, wie Propylgallat, Verdünnungsmittel, wie Dimethylsulfoxid, $\varepsilon$-Aminocaprolactam, Pyrrolidon, sowie Farbstoffe, Pigmente u.ä. selbst einen mehr oder minder großen Eigenverbrauch an Basen besitzen.

Der Basenverbrauch der Zellstoffe kann aus zwei Anteilen resultieren, nämlich einerseits aus einem Carboxylgruppengehalt der Cellulose und andererseits aus einem mehr oder minder großen Fremdsäuregehalt. Letzteren kann man durch Waschen der Zellstoffprobe entfernen. Der Basenverbrauch der Zusatzstoffe kann verschiedene Ursachen haben. Das Propylgallat kann z.B. äquimolare Mengen Base verbrauchen, da der Löseprozess in wässrigem Aminoxid mit einer Esterspaltung verbunden sein kann. Der äquimolare Basenverbrauch entsteht durch dieNeutralisation der gebildeten Gallussäure.

Nach der bevorzugten Ausführungsform des erfindungsgemäßen Verfahrens bestimmt man den Baseneigenverbrauch des Zellstoffs in der Dispersion bei einem pH-Wert der Aminoxid-Lösung von 8,5 < $p_H$ < 10,5. Es hat sich gezeigt, daß die Stabilität der Lösung dann optimal ist, wenn der eingesetzte Zellstoff und ggfs die Zusatzstoffe bis zum Erreichen eines $p_H$-Wertes in diesem Bereich neutralisiert werden.

Vorzugsweise bestimmt man den Baseneigenverbrauch des Zellstoffs und ggfs. der Zusatzstoffe dadurch, daß man (a) eine 5 bis 30 Masse-% Aminoxid enthaltende, wässrige Lösung mit einer Normallösung der Base gegen einen Indikator mit einer Halbwertstufe zwischen 8,5 und 10,5 titriert und (b) in der titrierten Lösung eine bestimmte Gewichtsmenge des Zellstoffs und ggfs. der Zusatzstoffe dispergiert und ggfs. löst und durch erneute Titration wie in der Stufe (a) den Baseneigenverbrauch des Zellstoffs und ggfs. der Zusatzstoffe bestimmt. Vorzugsweise geht man von einer 10 bis 20 Masse-% Aminoxid enthaltenden wässrigen Lösung aus und benutzt man als Normallösung der Base eine 0,1 n Lösung. Aus den Leitfähigkeitsmessungen (Figur 2) ist abzuleiten, daß Messungen, die bei Aminoxidkonzentrationen unterhalb des Maximums der Leitfähigkeit der Lösung durchgeführt werden, zu realen Messergebnissen führen sollten. Die in der Stufe (b) vorgelegte Zellstoffmenge n in Gramm (atro) ergibt sich aus

$$n = \frac{c_{Cell.} \cdot E \cdot A}{86{,}7 \cdot (100 - c_{Cell.})} \, [g] \qquad (4)$$

$c_{Cell.}$ = Cellulosegehalt in %, der aus der Suspension hergestellten Polymerlösung.
E = Einwaage Aminoxid in g
A = Gehalt des Aminoxides in %

Dabei ist der vorgelegte Zellstoff der Provenienz zu wählen, die auch im Lyocellverfahren eingesetzt werden soll. Durch erneute Titration wird der Basenverbrauch der Zellstoffprovenienz bestimmt und daraus der erforderliche Basenzusatz pro Mengeneinheit Zellstoff berechnet nach der Formel

$$g \; Base / kgZellstoff = \frac{a \cdot M \cdot c_{Base}}{n} \qquad (5)$$

a = verbrauchte ml Base zur 2.Titration
$c_{Base}$ = Normalität der Base
M = Molmasse der basischen Substanz

Soll eine Celluloselösung Zusatzkomponenten enthalten, so werden diese in der entsprechenden Menge gemeinsam mit dem Zellstoff in der austitriertem Aminoxid-Lösung dispergiert bzw. gelöst und der Basenverbrauch von Zellstoff und Zusatzkomponenten durch Titration bestimmt und der erforderliche Basenzusatz pro Mengeneinheit Cellulose einschließlich Zusatzstoffe berechnet.

Vorzugsweise wird der Indikator aus der aus Phenolphthalein mit einer Halbstufe von 9,5, p-Xylenolphthalein mit einer Halbstufe von 9,7 und Thymolblau mit einer Halbstufe von 8,9 bestehenden Gruppe ausgewählt. Bei der Neutralisation unter Benutzung dieser Indikatoren werden $p_H$-Werte in der Suspension für die Lösungsbildung erreicht, die für die Stabilität der Lösung besonders günstig sind, unabhängig von dem unterschiedlichen Verbrauch der Zellstoffprovenienzen und möglicher Zusatzstoffe an Basen und unabhängig von dem Einfluß des Aminoxids in derSuspension, das durchaus nicht einheitlich zu sein braucht, wenn es aus der Aufarbeitung z.B. eines verbrauchten Spinnbades stammt.

Zweckmäßigerweise löst man die dem Baseneigenverbrauch entsprechende Basenmenge vor, während oder nach dem Eintrag des Zellstoffs und ggfs der Zusatzstoffe in dem wässrigen Aminoxid. Vorzugsweise entzieht man dem Aminoxid unabhängig von seiner Herkunft alle Fremdionen über einen Ionenaustauscher.

Vorzugsweise setzt man als Base(n) zur Kompensation des Eigenverbrauchs des Zellstoffs bei der Lösungsherstellung eine Base mit einer $[OH^-] > 5{,}6 \cdot 10^{-4}$ mol/l ein, vorzugsweise Alkali- oder Erdalkalihydroxid, sekundäre, tertiäre oder quaternäre Amine.

Im allgemeinen bildet man die Celluloselösung aus einer Zellstoffsuspension in wässrigem Aminoxid durch Wasserverdampfung bei erhöhter Temperatur unter Vakuum. Die Temperatur kann z.B. in dem Bereich von 60 bis 100°C liegen, das Vakuum in dem Bereich von 10 bis 600 mbar, insbesondere von 30 bis 450 mbar.

Der Erfindung wird durch die Beispiele und Vergleichsbeispiele näher erläutert.

Beispiel 1

In einem Erlenmeyerkolben werden 193,9 g wässriges Aminoxid (20,0 % NMMO) vorgelegt mit einigen Tropfen Phenolphthalein versetzt und mit 0,1 n Natronlauge bis zum Umschlag von farblos nach rot titriert. In diese Lösung trägt man 6,1 g zerkleinerten Zellstoff [Fichtesulfitzellstoff "MoDo 027" der Firma MoDo, Cuoxam DP 505 berechnet für eine Polymerlösung mit 12 % Cellulose nach Gleichung (4)] ein und titriert erneut mit 0,1 n Natronlauge bis zum Umschlag.

$$g \; NaOH / kg \; Zellstoff = 4 \times a / n = 4 \times 0{,}28 / 6{,}1 = 0{,}184$$

a = in zweiter Stufe verbrauchte ml 0,1 n NaOH

In einem Rührbehälter werden 72,0 g Zellstoff und 13 mg NaOH in 763 g Aminoxidlösung (NMMO-Gehalt 60,0 %) eingetragen fein dispergiert und in einen Laborkneter übergeführt. Bei einer Temperatur von 90°C werden unter Vakuum 235 ml Wasser abdestilliert und die Cellulose gelöst. Nach einer Nachlösezeit von 1 Stunde erhält man eine mikroskopisch homogene Celluloselösung von gelblicher Farbe mit einer Nullscherviskosität von 2 435 Pas bei 85°C und einem Cuoxam DP von 460.

Vergleichsbeispiel 1

Es wird analog Beispiel 1 ohne Zusatz von Alkali verfahren. Man erhält eine bernsteinfarbene Lösung mit einer Nullscherviskosität von 2 080 Pas bei 85°C und einem Cuoxam DP von 440.

Beispiel 2

In einem Erlenmeyerkolben werden 193,9 g wässriges Aminoxid (20,0 % NMMO) vorgelegt mit einigen Tropfen Phenolphthalein versetzt und mit 0,1 n Natronlauge bis zum Umschlag von farblos nach rot titriert. In diese Lösung trägt man 6,1 g zerkleinerten Zellstoff [Fichtesulfitzellstoff "Temsupr" der Firma Tembec, Cuoxam DP 535, berechnet für eine Polymerlösung mit 12 % Cellulose nach Gleichung (4)] ein und titriert erneut mit 0,1 n Natronlauge bis zum Umschlag.

$$\text{g NaOH / kg Zellstoff} = 4 \times 2{,}10 / 6{,}1 = 1{,}377$$

Analog Beispiel 1 werden Zellstoff und Aminoxid unter Zusatz von 99 mg NaOH gemischt und zur Lösung verarbeitet. Man erhält eine gelbliche, mikroskopisch homogene Lösung mit einer Nullscherviskosität von 3100 Pas bei 85°C und einem Cuoxam DP von 485.

Vergleichsbeispiel 2

Es wird analog Beispiel 2 gearbeitet ohne Zusatz von Alkali. Man erhält eine gelbe, mikroskopisch homogene Lösung mit einer Nullscherviskosität von 2 390 Pas bei 85°C und einem Cuoxam DP von 450.

Beispiel 3

In einem Erlenmeyerkolben werden 200 g Aminoxid (16,33 % NMMO) vorgelegt mit einigen Tropfen p-Xylenolphthalein versetzt und mit 0,1 n NaOH bis zum Umschlag von farblos nach blau titriert. Im austitriertem Aminoxid suspendiert man 5,93 g Zellstoff [Kraftzellstoff Typ FR der Firma Weyerhaeuser, Trockengehalt 95,0 %, Cuoxam DP 490, Carboxylgruppengehalt 31,5 $\mu$mol/g, mehrfach in destilliertem Wasser aufgeschwemmt, gewaschen und getrocknet, berechnet für eine Lösung mit 13,0 % Cellulose nach Gleichung (4)] und titriert erneut mit 0,1 n Natronlauge bis zum Farbumschlag nach blau. Der Verbrauch beträgt 1,77 ml 0,1 n NaOH. Daraus resultiert nach Gleichung (5) ein Alkaliverbrauch von 1,258 g NaOH/kg Zellstoff. Wie sich leicht nachrechnen lässt, entspricht der Verbrauch von 1,77 ml 0,1 n NaOH 31,4 $\mu$mol -COOH/g Cellulose.
In einem Parallelversuch werden im austitriertem Aminoxid zunächst 16,9 mg Propylgallat x 2 Wasser (entspricht 0,068 mmol bzw. 0,3 % bezogen auf 5,63 g Cellulose) gelöst und mit 0,1 n NaOH von farblos nach blau titriert. Der Verbrauch beträgt 0,68 ml 0,1 n NaOH, d.h. die zum Propylgallat äquimolare Menge Natronlauge. Der berechnete Bedarf bei dieser Stabilisierung beträgt 0,483 g NaOH/kg Zellstoff. In der austitrierten Lösung werden nun 5,93 g des gleichen Zellstoffs, aber ungewaschen, suspendiert und bis zum Umschlag titriert. Der Verbrauch beträgt 2,05 ml 0,1 n Natronlauge, was nach Gleichung (5) einem Alkaliverbrauch von 1,456 g NaOH/kg Cellulose entspricht. Die Differenz zwischen ungewaschenem und gewaschenen Zellstoff beträgt 1,456 - 1,258 = 0,198 g NaOH/kg Zellstoff sollte einem äquivalenten Anteil anhaftender Säure entsprechen.
Für den Zellstoff vom Typ FR folgt ein Gesamtalkalibedarf von 1,456 + 0,483 = 1,939 g NaOH/kg Zellstoff.
In einen Kneter mit vertikaler Kneterwelle trägt man 2 417 g Aminoxid (Trockengehalt 62,4 % NMMO), 2,52 g Natronlauge (Trockengehalt 20,0 %) und 0,78 g Propylgallat x 2 $H_2O$ ein. Nach vollständigem Auflösen beider Komponenten, dispergiert man 274 g Zellstoff Typ FR (Trockengehalt 95,0 %) und destilliert bei 90°C und fallendem Vakuum (450 bis 30 mbar) 925 g Wasser ab. Nach 30 Minuten Nachlösezeit entsteht eine gelbe, mikroskopisch homogene Celluloselösung mit 13 % Cellulose und einer Nullscherviskosität von 6500 Pas bei 85°C. Der Cuoxam DP der aus der Lösung regenerierten Cellulose beträgt 478. Die Lösung kann ohne Probleme nach dem Trocken-Naß-Extrusionsverfahren zu Fasern bzw. Filamentgarnen versponnen werden.

Vergleichsbeispiel 3

Es wird analog Beispiel 2 unter Zusatz von 720 mg NaOH gearbeitet. Man erhält eine dunkelbraun bis schwarze Lösung mit einer Nullscherviskosität von 1 800 Pas.
Die Beispiele 1 und 2 mit erfindungsgemäß bestimmten Alkalizusätzen führen zu den höchsten Werten für die Nullscherviskosität bei 85°C,d.h. sie zeigen den geringsten Abbau. Dabei ist bemerkenswert, das sich der Alkalibedarf beider Zellstoffe um den Faktor 7,5 unterscheidet. Ein zu wenig (Vergl.-B. 1+2) bzw. ein zu viel an Alkalizusatz (Vergl.-B.3) führen zu einem stärkeren Abbau und einer geringeren Nullscherviskosität.

**Patentansprüche**

1. Verfahren zur Herstellung einer Lösung erhöhter thermischer Stabilität von Cellulose in wässrigem Aminoxid, vorzugsweise N-Methylmorpholin-N-oxid, für die Verarbeitung zu cellulosischen Formkörpern nach dem Lyocell-Verfahren, bei dem man Zellstoff in wässrigem Aminoxid suspendiert und die Suspension in die Celluloselösung überführt, **dadurch gekennzeichnet, daß** man

   den Basenverbrauch des zur Lösungsherstellung eingesetzten Zellstoffs und der gegebenenfalls eingesetzten Zusatzstoffe in einer Dispersion in wässriger Aminoxidlösung bestimmt und

   die Celluloselösung unter Zusatz einer dem bestimmten Eigenverbrauch des Zellstoffs und gegebenenfalls der Zusatzstoffe entsprechenden Basenmenge bildet.

2. Verfahren nach Anspruch 1, **dadurch gekennzeichnet, daß** man den Baseneigenverbrauch des Zellstoffs in der Dispersion bei einem $p_H$-Wert der Aminoxidlösung von $8,5 < p_H < 10,5$ bestimmt.

3. Verfahren nach Anspruch 1 oder 2, **dadurch gekennzeichnet, daß** man den Baseneigenverbrauch des Zellstoffs und gegebenenfalls der Zusatzstoffe bestimmt, indem man

   a) eine 5 bis 30 Masse-% Aminoxid enthaltende, wässrige Lösung mit einer Normallösung der Base gegen einen Indikator mit einer Halbwertstufe zwischen 8,5 und 10,5 titriert und

   b) in der titrierten Lösung eine bestimmte Gewichtsmenge des Zellstoffs und gegebenenfalls der Zusatzstoffe dispergiert und gegebenenfalls löst und durch erneute Titration wie in der Stufe a) den Baseneigenverbrauch des Zellstoffs und gegebenenfalls der Zusatzstoffe bestimmt.

4. Verfahren nach einem der Ansprüche 1 bis 3, **dadurch gekennzeichnet, daß** die Zusatzstoffe aus der aus Stabilisatoren, Verdünnungsmitteln für Aminoxide, Füllstoffen, Tensiden und Farbstoffen bestehenden Gruppe ausgewählt werden.

5. Verfahren nach Anspruch 3 oder 4, **dadurch gekennzeichnet, daß** der Indikator, aus der aus Phenolphthalein mit einer Halbstufe von 9,5, p-Xylenolphthalein mit einer Halbstufe von 9,7 und Thymolblau mit einer Halbstufe von 8,9 bestehenden Gruppe ausgewählt wird.

6. Verfahren nach einem der Ansprüche 1 bis 5, **dadurch gekennzeichnet, daß** man die dem Baseneigenverbrauch entsprechende Basenmenge vor, während oder nach dem Eintrag des Zellstoffs und ggfs. der Zusatzstoffe in dem wässrigen Aminoxid löst.

7. Verfahren nach einem der Ansprüche 1 bis 6, **dadurch gekennzeichnet, daß** man dem Aminoxid unabhängig von seiner Herkunft alle Fremdionen über Ionenaustauscher entzieht.

8. Verfahren nach einem der Ansprüche 1 bis 7, **dadurch gekennzeichnet, daß** man als Base(n) zur Kompensation des Eigenverbrauchs bei der Lösungsherstellung eine Base mit einer $[OH^-] > 5,6 \cdot 10^{-4}$ mol/l, vorzugsweise Alkali- oder Erdalkalihydroxid, sekundäre, tertiäre oder quaternäre Amine einsetzt.

9. Verfahren nach einem der Ansprüche 1 bis 8, **dadurch gekennzeichnet, daß** man die Celluloselösung aus einer Zellstoffsuspension in wässrigem Aminoxid durch Wasserverdampfung bei erhöhter Temperatur unter Vakuum bildet.

**Revendications**

1. Procédé pour la production d'une solution cellulosique d'amine-oxyde aqueux de préférence le N-oxyde de N-méthylmorpholine, de plus haute stabilité thermique, pour le façonnage de corps moulés en cellulose, d'après le procédé Lyocell, selon lequel la cellulose est tenue en suspension dans un amine-oxyde aqueux, et la suspension est transmise à la solution cellulosique, **caractérisé par le fait que**

   l'on déterminera la consommation basique de la cellulose et des additifs, le cas échéant, utilisés pour la production de la solution, dans une dispersion en solution d'amine-oxyde aqueux et que

   la solution cellulosique sera formée, en ajoutant la quantité adéquate de base définie par la consommation propre de la cellulose et des additifs, le cas échéant.

**2.** Procédé selon la revendication 1, **caractérisé par le fait que** la consommation basique propre de la cellulose sera déterminée dans la dispersion avec la valeur $p_H$ de la solution d'amine-oxyde de 8,5 < $p_H$ < 10,5.

**3.** Procédé selon les revendications 1 et 2, **caractérisé par le fait que** la consommation basique propre de la cellulose et des additifs, le cas échéant, sera déterminée, en

a) titrant une solution aqueuse, contenant un amine-oxyde de 5 à 30 % de pourcentage massique (de la masse), avec une solution basique normale contre un indicateur de demi-phase entre 8,5 et 10,5, et en
b) dispersant dans la solution titrée, une certaine quantité de la cellulose et des additifs, le cas échéant, ou en la dissolvant éventuellement et en déterminant par titrage réitéré comme dans la phase a) la consommation basique propre de la cellulose et des additifs, le cas échéant.

**4.** Procédé selon l'une des revendications 1 à 3, **caractérisé par le fait que** les additifs choisis appartiennent au groupe comprenant les stabilisateurs, les diluants pour amine-oxydes, les remplisseurs, les agents tensioactifs et les agents colorants.

**5.** Procédé selon la revendication 3 ou 4, **caractérisé par le fait que** l'indicateur choisi appartienne au groupe comprenant la phénolphtaléine avec une demi-phase de 9,5, la p-xylénolphtaléine avec une demi-phase de 9,7 et le bleu de thymol avec une demi-phase de 8,9.

**6.** Procédé selon l'une des revendications 1 à 5, **caractérisé par le fait que** la quantité de base correspondant à la consommation basique propre sera diluée dans l'amine-oxyde aqueux, avant, pendant et après l'apport de la cellulose et des additifs, le cas échéant.

**7.** Procédé selon l'une des revendications 1 à 6, **caractérisé par le fait que** tous les ions étrangers seront extraits de l'amine-oxyde par des échangeuses d'ions, indépendamment de sa provenance.

**8.** Procédé selon l'une des revendications 1 à 7, **caractérisé par le fait qu'**on utilisera comme base(s), en compensation de la consommation propre lors de la production de la solution, une base avec une amine secondaire, tertiaire ou quaternaire [OH⁻] > 5,6·10⁻⁴ mol/l de préférence un hydroxyde alcalin ou alcalinoterreux.

**9.** Procédé selon l'une des revendications 1 à 8, **caractérisé par le fait que** la solution cellulosique soit produite avec une suspension cellulosique en amine-oxyde aqueux par évaporation d'eau sous vide, à température élevée.

**Claims**

**1.** A method for the production of a cellulose solution with increased thermal stability of cellulose in aqueous amine oxide, preferably N-Methyl-morpholine-N-Oxide, for producing cellulose form articles according to the Lyocell process, in which the cellulose is supended in aqueous amine oxide and the suspension is transformed into the cellulose solution,
**characterised in**
**that** the internal alkali consumption of the cellulose pulp and its additives, if applicable, dispersed in the aqueous amine oxide solution is determined and
**that** an alkaline substance in a quantity that corresponds to the determined internal consumption of the cellulose and the additives, if applicable, is added to the cellulose suspension thus forming the cellulose solution.

**2.** The method according to claim one, **characterised in that** the internal alkali consumption of the cellulose pulp in the dispersion is determined at a pH -value of the amine oxide solution of 8.5<pH <10.5.

**3.** The method according to claim one or two, **characterised in that** the internal alkali consumption of the cellulose and, if applicable, the additives, is determined by

a) titrating an aqueous solution containing 5 to 30 percent-by-mass amine oxide with a normal solution of the alkali against an indicator with a half-value stage between 8.5 and 10.5, and
b) dispersing and dissolving a specific weight quantity of the pulp and the additives, if applicable, in the titrated solution, and anew determining the internal alkali consumption of the cellulose and, if applicable, the additives, by titration as in step a).

4. The method according to one of the claims one to three, **characterised in that** the additives are selected from the group comprised by stabilizers, diluents for amine oxides, fillers, tensides and coloring agents.

5. The method according to claim 3 or 4, **characterised in that** the indicator is selected from the group comprised of phenolphthalein with a half-stage of 9.5, p-xylenolphthaleine with a half-stage of 9.7 and thymol blue with a half-stage of 8.9.

6. The method according to one of the claims 1 to 5, **characterised in that** the alkali quantity corresponding to the internal alkali consumption is dissolved in aqueous amine oxide prior to, during, or after the addition of the pulp and, if applicable, the additives.

7. The method according to one of thje claims 1 to 6, **characterised in that** all foreign ions are removed from the amine oxide, regardless of its provenance, by an ion exchanger.

8. The method according to one of the claims 1 to 7, **characterised in that** the alkaline substance is a basic solution with an $[OH] > 5.6 \cdot 10^{-4}$ mol/l, preferably comprising a member selected from the group consisting of: alkali hydroxide, earth alkali hydroxide, secondary amines, tertiary amines and quaternary amines.

9. The method according to one of the claims 1 to 8, **characterised in that** water is evaporated at increased temperature and under vacuum from the cellulose pulp suspension in an aqueous amine oxide solution to form the cellulose solution.

FIGUR 2

EP 1 263 845 B1